Europäisches Patentamt

European Patent Office

Office européen des brevets

(11) Veröffentlichungsnummer: **0 035 466**
**A1**

(12) **EUROPÄISCHE PATENTANMELDUNG**

(21) Anmeldenummer: 81730013.0

(22) Anmeldetag: 05.02.81

(51) Int. Cl.³: **G 01 F 3/08**

(30) Priorität: 29.02.80 DE 3008248

(71) Anmelder: **SIEMENS AKTIENGESELLSCHAFT Berlin und München, Postfach 22 02 61, D-8000 München 22 (DE)**

(43) Veröffentlichungstag der Anmeldung: **09.09.81 Patentblatt 81/36**

(72) Erfinder: **Diepold-Scharnitzky, Rudolf, Ing. grad., Waldenser Strasse 33, D-1000 Berlin 21 (DE)**

(84) Benannte Vertragsstaaten: **CH FR GB IT LI NL**

(54) **Volumenzähler.**

㊻ Die Erfindung bezieht sich auf einen Volumenzähler mit einem Drehkolben mit mindestens einem Magneten und mit einem Meßwertaufnehmer, der magnetfeldempfindliche Bauelemente aufweist. Zur Erhöhung der Meßgenauigkeit des Volumenzählers sind eine Vielzahl von magnetfeldempfindlichen Bauelementen (1) entsprechend der Bewegungsbahn (4) des Magneten (5) angeordnet, und es werden mit elektronischen Bausteinen (14, 15, 16) nur entweder die positiven oder die negativen Flanken des Ausgangssignals der magnetempfindlichen Bauelemente (14, 15, 16) ausgewertet. Die Erfindung ist vor allem bei Lebensmittelzählern anwendbar.

EP 0 035 466 A1

SIEMENS AKTIENGESELLSCHAFT       Unser Zeichen
Berlin und München               VPA  80 P 3712 DE

Volumenzähler

Die Erfindung bezieht sich auf einen Volumenzähler mit einem Drehkolben, der mindestens einen Magneten trägt, und mit einem Meßwertaufnehmer, der dem Drehkolben benachbart angeordnet ist und magnetfeldempfindliche Bauelemente aufweist, die im Einflußbereich des Magneten liegen.

Bei einem bekannten Volumenzähler dieser Art (DE-AS 22 43 936) sind die magnetfeldempfindlichen Bauelemente im Mittelpunkt einer Bewegungsbahn des Erregermagneten angeordnet und mit U-förmigen magnetischen Leitstreifen zur Führung der magnetischen Feldlinien versehen, deren Pole sich diametral auf der Bewegungsbahn gegenüberliegen. Zur Erhöhung der Meßgenauigkeit ist bei diesem bekannten Volumenzähler die Anordnung von mehreren Polen vorgesehen, wobei jedoch durch die zentrale Anordnung der magnetfeldempfindlichen Bauelemente im Mittelpunkt der Bewegungsbahn und die relativ großen Ausmaße der Pole und der magnetischen Leitstreifen der Erhöhung der Meßgenauigkeit aus räumlichen Gründen enge Grenzen gesetzt sind. Außerdem besteht beim Anordnen relativ zahlreicher eng benachbarter Pole die Gefahr von Fehlauslösungen der magnetfeldempfindlichen Bauelemente.

Der Erfindung liegt demgemäß die Aufgabe zugrunde, die Meßgenauigkeit des Volumenzählers unter Vermeidung von Meßfehlern aufgrund Fehlauslösungen der magnetfeldempfindlichen Bauelemente zu erhöhen.

Ag 3 Sby / 22.01.1980

Zur Lösung dieser Aufgabe ist bei einem Volumenzähler der eingangs angegebenen Art erfindungsgemäß eine Vielzahl von magnetfeldempfindlichen Bauelementen vorgesehen; die magnetfeldempfindlichen Bauelemente sind der Bewegungsbahn des Magneten entsprechend angeordnet; die Ausgänge der magnetfeldempfindlichen Bauelemente sind mit elektronischen Bausteinen verbunden, die auf die jeweils positive oder auf die jeweils negative Flanke des Ausgangssignals der magnetfeldempfindlichen Bauelemente hin einen kurzen elektrischen Impuls erzeugen, wobei die von jeweils benachbarten magnetfeldempfindlichen Bauelemente angeregten kurzen elektrischen Impulse jeweils aufeinander folgen.

Vorteilhaft ist der erfindungsgemäße Volumenzähler, da durch die Anordnung einer Vielzahl von magnetfeldempfindlichen Bauelementen die Auflösung und somit die Meßgenauigkeit des Volumenzählers stark vergrößert werden kann, ohne daß es zu Meßfehlern infolge Fehlauslösungen der Bauelemente kommt, weil durch die Ausnutzung nur der positiven oder negativen Flanken der Ausgangssignale der magnetfeldempfindlichen Bauelemente eine Überlappung der Ausgangssignale für die Auflösung nicht schädlich ist. Die magnetfeldempfindlichen Bauelemente können also unmittelbar einander benachbart entsprechend der Bewegungsbahn angeordnet werden. Da nur jeweils ein magnetfeldempfindliches Bauelement zu einem Zeitpunkt einen kurzen elektrisches Impuls erzeugt, sind Meßfehler infolge Fehlauslösungen verhindert.

Es kann in einfacher Weise jedem magnetischen Bauelement ein elektronischer Baustein zugeordnet werden, wobei alle elektronischen Bausteine gleicher Bauart sind.

Zur Verringerung des Schaltungsaufwandes sind in vorteilhafter Weise die magnetfeldempfindlichen Bauelemente zu Gruppen zusammengefaßt, indem jeweils nach einer gleichen Anzahl von dazwischen liegenden magnetfeldempfindlichen Bauelementen aufeinanderfolgende magnetfeldempfindliche Bauelemente miteinander verbunden sind,
und jeder Gruppe ein elektronischer Baustein zugeordnet ist.

Zur Auswertung der kurzen elektrischen Impulse werden
die Ausgänge der elektronischen Bausteine vorteilhafterweise über ein ODER-Gatter verknüpft, so daß am Ausgang des ODER-Gatters ein Signal zur Verfügung steht,
welches in einfacher Weise einer Zähleinrichtung zugeführt werden kann.

Mit einer weiteren Ausführungsform des erfindungsgemäßen
Volumenzählers wird die Meßgenauigkeit noch weiter erhöht, indem die Abstände zwischen jeweils benachbarten
magnetfeldempfindlichen Bauelementen entlang der Bewegungsbahn des Magneten so gewählt sind, daß trotz
eines Systemfehlers des Volumenzählers jedem Impuls
ein gleiches Volumen zugeordnet ist.

Bei dieser Ausführungsform können Systemfehler, die durch
eine nichtlineare Abhängigkeit einer durchgeflossenen
Flüssigkeit bzw. eines Gases vom Drehwinkel
des Drehkolbens verursacht sind, durch entsprechende Anordnung der magnetfeldempfindlichen Bauelemente
in vorteilhafter Weise kompensiert werden. Die Anzahl
der kurzen elektrischen Impulse ist hier dem Volumen
stets exakt proportional.

Bei einer anderen bevorzugten Ausführungsform des erfindungsgemäßen Volumenzählers befindet sich an der vom
Magneten abgewandten Seite der magnetfeldempfindlichen
Bauelemente eine Platte, die aus magnetisch gut leiten-

- 4 -    VPA 80 P 3712 DE

tem Material besteht und eine ebene Oberfläche aufweist, die zur Polarisationsachse des Magneten senkrecht steht.

Durch die Anordnung dieser magnetisch gut leitenden Platte an den magnetfeldempfindlichen Bauelementen wird in vorteilhafter Weise eine Konzentrierung des Magnetfeldes des Magneten im Bereich der magnetfeldempfindlichen Bauelemente erreicht, so daß die Ansprechsicherheit der magnetfeldempfindlichen Bauelemente und somit die Meßgenauigkeit des Volumenzählers noch weiter erhöht wird.

Vorteilhaft ist außerdem, wenn bei dem erfindungsgemäßen Volumenzähler die magnetfeldempfindlichen Bauelemente Hallschalter sind, die aus einer Hallsonde mit einem integrierten Schaltverstärker bestehen.

Durch die geringen Abmaße der Hallschalter, die eine äußerst magnetfeldempfindliche Hallsonde enthalten, kann eine große Anzahl von magnetfeldempfindlichen Bauelementen auf der Bewegungsbahn des Magneten angeordnet werden; außerdem gewährleistet der integrierte Schaltverstärker ein ausreichendes Ausgangssignal des Hallschalters, welches den elektronischen Bausteinen zugeführt wird.

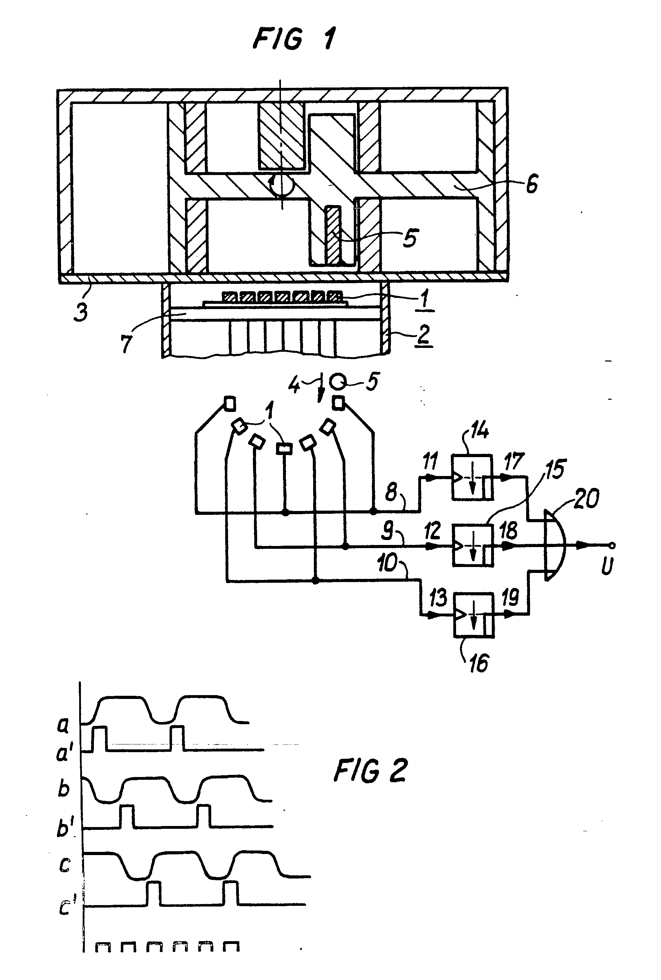

Die Erfindung wird anhand der Figuren erläutert, wobei Fig. 1 den für die Erfindung wesentlichen Teil eines Ausführungsbeispiels des erfindungsgemäßen Volumenzählers mit Magneten und Meßumformer     zeigt und Fig. 2 ein Impulsdiagramm der auftretenden Impulse darstellt.

Bei dem in der Fig. 1 dargestellten Volumenzähler bilden magnetfeldempfindliche Bauelemente 1 Teile eines Meßumformer       2, der in oder an einer feststehenden
Wand 3 des Volumenzählers angeordnet ist. Die magnetfeldempfindlichen Bauelemente 1 sind entsprechend der Bewegungsbahn 4 eines Magneten 5 angebracht, der an einem
Drehkolben 6 des Volumenzählers gehalten ist. An der dem
Magneten 5 abgewandten Seite der Bauelemente 1 ist eine
magnetisch gut leitende Platte 7 angeordnet. Die magnetempfindlichen Bauelemente 1, die hier von Hallschaltern
gebildet sind, sind zu Gruppen 8, 9, 10 zusammgengeschaltet, indem jeweils das erste mit dem mit dem vierten,
das zweite mit dem fünften und das dritte mit dem
sechsten Bauelement usw. zusammengeschaltet ist.

Die Ausgänge der Gruppen 8, 9, 10 sind mit den Eingängen
11, 12 und 13 von elektronischen Bausteinen 14, 15, 16
verbunden. Die elektronischen Bausteine 14, 15, 16 sind
monostabile Kippstufen. Die Eingänge 11, 12, und 13
dieser monostabilen Kippstufen sind Triggereingänge,
über die jeweils nur die positiven oder negativen Flanken
eines Signals ausgewertet werden. An den Ausgängen 17,
18, 19 der monostabilen Kippstufen 14, 15, 16 entstehen,
angeregt durch die Signale an den Triggereingängen kurze
elektrische Impulse, deren Impulsdauer so bemessen ist,
daß die an den verschiedenen Ausgängen anstehenden kurzen
elektrischen Impulse jeweils nacheinander auftreten. Über
ein ODER-Gatter 20 sind diese Ausgänge 17, 18, 19 miteinander verknüpft und bilden das impulsförmige Ausgangssignal $U_A$, welches mit einer Zählerschaltung ausgewertet
werden kann.

Im Impulsdiagramm gemäß Fig. 2 sind die Ausgangssignale
a, b, c des ersten bis dritten magnetfeldempfindlichen
Bauelements dargestellt. Die Impulse a', b', c' stellen
die kurzen elektrischen Impulse      der monostabilen
Kippstufen   dar, wobei der kurze elektrische Impuls a'
zum Zeitpunkt der positiven Flanke des Ausgangssignals a auftritt. Die Impulse b' und c' treten zu den Zeitpunkten der positiven Flanke der Ausgangssignale b
bzw. c auf. Ferner bildet der Impuls d das Ausgangssignal
$U_A$, welches in diesem Fall aus einer Verknüpfung der
Impuls a', b', c' mit Hilfe des ODER-Gatters 20 gebildet ist.

Die Funktionsweise des erfindungsgemäßen Volumenzählers
wird anhand der Fig. 1 erläutert. Der Magnet 5 führt mit
dem Drehkolben 6 des Volumenzählers eine Drehbewegung
aus, so daß die magnetfeldempfindlichen Bauelemente
nacheinander in seinen Einflußbereich gelangen. Zum
Zeitpunkt der Aktivierung eines magnetfeldempfindlichen
Bauelementes 1 - also während der positiven Flanke
des Ausgangssignals des Bauelementes - wird der mit
ihm verbundene elektronische Baustein angeregt, der an
seinem Ausgang einen kurzen elektrischen Impuls abgibt.
Dieser kurze Impuls ist bereits vor dem Zeitpunkt
beendet, an dem der Magnet 5 das in der Drehrichtung
folgende Bauelement 1 aktiviert, so daß eine optimale
Auflösung während des Meßvorgangs gewährleistet und
ein Meßfehler aufgrund einer Fehlauslösung durch Impulsabgabe mehrerer magnetfeldempfindlicher Bauelemente verhindert ist.

2 Figuren
7 Ansprüche

Patentansprüche

1. Volumenzähler mit
   a) einem Drehkolben, der
      a1) mindestens einen Magneten trägt, und mit
   b) einem Meßumformer, der
      b1) dem Drehkolben benachbart angeordnet ist und
      b2) magnetfeldempfindliche Bauelemente aufweist,
         die im Einflußbereich des Magneten liegen,
d a d u r c h   g e k e n n z e i c h n e t , daß
   c) eine Vielzahl von magnetfeldempfindlichen Bauelementen (1) vorgesehen ist,
   d) die magnetfeldempfindlichen Bauelemente (1) der
      Bewegungsbahn (4) des Magneten (5) entsprechend
      angeordnet sind, sowie
   e) die Ausgänge der magnetfeldempfindlichen Bauelemente mit elektronischen Bausteinen (14, 15, 16)
      verbunden sind, die
      e1) auf die jeweils positive oder auf die jeweils
         negative Flanke des Ausgangssignals der magnetfeldempfindlichen Bauelemente (1) hin einem
         kurzen elektrischen Impuls erzeugen, wobei die
   f) von jeweils benachbarten magnetfeldempfindlichen
      Bauelemente (1) angeregten kurzen elektrischen
      Impulse jeweils aufeinander folgen (Fig. 1).

2. Volumenzähler nach Anspruch 1, d a d u r c h   g e -
k e n n z e i c h n e t , daß
   g) jedem magnetfeldempfindlichen Bauelement ein elektronischer Baustein (14, 15, 16) zugeordnet ist.

3. Volumenzähler nach Anspruch 1, d a d u r c h   g e -
k e n n z e i c h n e t , daß
   h) die magnetfeldempfindlichen Bauelemente (1) zu
      Gruppen (8, 9, 10) zusammengefaßt sind, indem

h1) jeweils nach einer gleichen Anzahl von dazwischen liegenden magnetfeldempfindlichen Bauelementen (1) aufeinanderfolgende magnetfeldempfindliche Bauelemente (1) miteinander verbunden sind, und

j) jeder Gruppe (8, 9, 10) ein elektronischer Baustein (14, 15, 16) zugeordnet ist (Fig. 1).

4. Volumenzähler nach einem der vorangehenden Ansprüche, d a d u r c h   g e k e n n z e i c h n e t , daß

k) die Ausgänge (17, 18, 19) der elektronischen Bausteine (14, 15, 16) mit Eingängen eines ODER-Gatters (20) verbunden sind (Fig. 1).

5. Volumenzähler nach einem der vorangehenden Ansprüche, d a d u r c h   g e k e n n z e i c h n e t , daß

l) die Abstände zwischen jeweils benachbarten magnetfeldempfindlichen Bauelementen (1) entlang der Bewegungsbahn (4) des Magneten (5) so gewählt sind, daß trotz eines Systemfehlers des Volumenzählers jedem Impuls ein gleiches Volumen zugeordnet ist.

6. Volumenzähler nach einem der vorangehenden Ansprüche, d a d u r c h   g e k e n n z e i c h n et, daß

m) sich an der vom Magneten (5) abgewandten Seite der magnetfeldempfindlichen Bauelemente (1) eine Platte (7) befindet, die

m1) aus magnetisch gut leitendem Material besteht und

m2) eine ebene Oberfläche aufweist, die zur Polarisationsachse des Magneten (5) senkrecht steht (Fig. 1).

0035466

7. Volumenzähler nach einem der vorhergehenden Ansprüche,
d a d u r c h   g e k e n n z e i c h n e t  , daß

    n) die magnetfeldempfindlichen Bauelemente (1) Hallschalter sind, die

    n1) aus einer Hallsonde mit

    n2) einem integrierten Schaltverstärker bestehen.

00035466

80 P 3712

FIG 1

FIG 2

0035466

Europäisches Patentamt

**EUROPÄISCHER RECHERCHENBERICHT**

Nummer der Anmeldung

EP 81730013.0

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | G 01 F 3/08 |
| D | DE - B - 2 243 936 (DIESSEL) <br> + Patentansprüche 1,2 + <br> -- | 1,7 | |
| | AT - B - 257 972 (MERESTECHNIKAI) <br> + Fig. 2 + <br> -- | 1,5 | |
| | DE - B2 - 2 439 971 (AUGUST) <br> + Fig. 1 + <br> -- | 1,5 | |
| | DE - B - 1 o97 152 (SIEMENS) <br> + Fig. 2 + <br> -- | 1 | **RECHERCHIERTE SACHGEBIETE (Int. Cl.³)** <br><br> G 01 F 1/00 |
| | DE - B - 1 239 112 (PARKINSON) <br> + Fig. 1 + <br> -- | 1 | G 01 F 3/00 <br> G 01 F 15/00 |
| | FR - A - 1 513 527 (SCHLUMBERGER) <br> + Fig. 1 + <br> ---- | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 12-05-1981 | STÖGER |